# FASCICULE DE BREVET EUROPEEN

(11) **EP 3 609 778 B1**
(45) Date de publication et mention de la délivrance du brevet: **19.05.2021**
(21) Numéro de dépôt: 18716290.4
(22) Date de dépôt: 11.04.2018
(51) Int. Cl.: B63B 35/44, F03D 13/25

(54) **FLOTTEUR, NOTAMMENT D'ÉOLIENNE OFFSHORE**
SCHWIMMER, INSBESONDERE FÜR EINE OFFSHORE-WINDTURBINE
FLOAT, NOTABLY FOR AN OFFSHORE WIND TURBINE

(30) Priorité: 11.04.2017 FR 1753158
(43) Date de publication de la demande: 19.02.2020
(73) Titulaire: Naval Energies, 75015 Paris (FR)
(72) Inventeur: LE GLEAU, Anthony, 75015 Paris (FR); DAVY, François, 75015 Paris (FR)
(74) Mandataire: Lavoix
(86) Numéro de dépôt international: PCT/EP2018/059321
(87) Numéro de publication internationale: WO 2018/189257

(56) Documents cités:
- WO-A1-2010/029766
- WO-A1-2013/155521
- WO-A1-2016/138088

## Description

La présente invention concerne un flotteur notamment d'éolienne offshore. De tels flotteurs sont déjà connus de l'état de la technique, comme par exemple des documents WO 2014/031009 A1 et WO 2016/138088 A1.

Ce document décrit un flotteur comportant au moins quatre colonnes par exemple en acier, dont une colonne centrale, et trois colonnes extérieures raccordées à la colonne centrale par des branches en forme de ponton, par exemple en béton.

Dans ce document, les colonnes extérieures sont reliées à la colonne centrale selon une configuration en étoile.

Les colonnes extérieures et les branches en forme de ponton de ce flotteur comportent des ballasts permettant de régler la flottabilité du flotteur.

Pour la construction de ce type de flotteur, les branches en forme de ponton et les colonnes sont fabriquées séparément dans une première étape puis assemblées les unes sur les autres dans une deuxième étape.

Cette étape de construction du flotteur consiste alors en l'assemblage des colonnes aux branches en forme de ponton sur des portions de montage correspondantes de ces branches.

Mais ce type de flotteur pose des problèmes d'assemblage des colonnes sur les branches en forme de ponton.

En particulier, se pose le problème de l'assemblage des colonnes de manière rapide et sécurisée sur les branches correspondantes.

Ainsi par exemple cet assemblage se fait à l'aide de machines telles que des grues de manutention, qui ne peuvent pas présenter toute la précision requise.

De plus il peut arriver que des conditions météorologiques défavorables viennent également perturber cet assemblage.

L'un des buts de l'invention est de pallier les inconvénients ci-dessus en proposant un flotteur d'éolienne, notamment d'éolienne offshore, dont la conception autorise un montage rapide et sécurisé des colonnes sur les branches en forme de ponton.

A cet effet, l'invention concerne un flotteur, notamment d'éolienne offshore, du type précité et selon la partie caractérisante de la revendication 1.

Suivant des modes de réalisation particuliers, le flotteur selon l'invention peut comprendre l'une ou plusieurs des caractéristiques des revendications 2 à 9.

L'invention sera mieux comprise à la lecture de la description qui va suivre, donnée uniquement à titre d'exemple et faite en se référant aux dessins annexés, sur lesquels :
- la figure 1 représente une vue schématique en perspective d'un exemple de réalisation d'un flotteur d'éolienne offshore selon l'invention,
- la figure 2 est une vue avec des portions arrachées et en transparence, illustrant la fixation d'une colonne sur une branche en forme de ponton d'un flotteur de la figure 1,
- la figure 3 est une vue en coupe d'une partie d'une branche en forme de ponton et d'une partie d'une colonne, illustrant la fixation d'une colonne sur une branche en forme de ponton du flotteur de la figure 1, et
- la figure 4 est une vue de l'intérieur d'une colonne du flotteur de la figure 1.

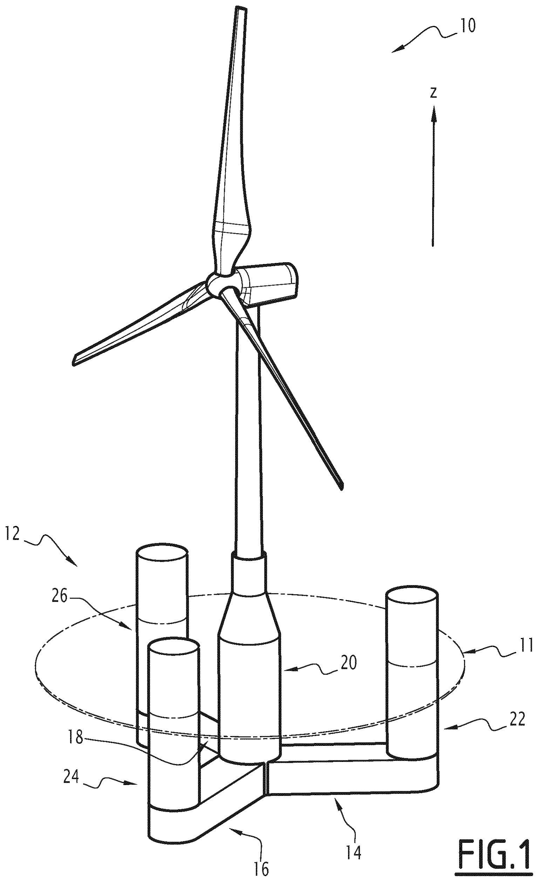

Une éolienne offshore est représentée sur la figure 1 et est désignée par la référence 10.

L'éolienne 10 comprend un flotteur désigné par la référence 12.

Il est défini, dans la présente description, une direction verticale, représentée par l'axe Z sur les figures, et nommée dans la présente description « direction verticale Z ». La direction verticale Z est la direction normale au plan de la mer, désigné par la référence 11.

Dans la présente description, les termes « inférieur » et « supérieur » sont des termes relatifs.

Ainsi la distance entre le niveau de la mer et un élément inférieur, mesurée selon la direction verticale Z est plus petite que la distance entre le niveau de la mer et un élément supérieur, mesurée selon la direction verticale Z.

Le flotteur 12 est par exemple un flotteur de type dit « hybride ».

On entend, dans la présente description, par le terme « hybride », un flotteur utilisant au moins deux matériaux différents pour réaliser des parties différentes du flotteur 12.

Le flotteur 12 comprend trois branches en forme de ponton, identifiées sur la figure 1 par les références 14, 16 et 18.

Les branches 14, 16 et 18 en forme de ponton sont agencées dans l'exemple décrit, en étoile, c'est-à-dire que les branches 14, 16 et 18 s'étendent radialement autour d'un axe parallèle à la direction verticale Z.

Les branches 14, 16 et 18 en forme de ponton sont réalisées, par exemple, en béton.

Bien entendu, ces branches peuvent être réalisées en d'autres matériaux, comme par exemple des matériaux composites.

Ces branches 14, 16 et 18 en forme de ponton ont, par exemple, une forme parallélépipédique.

Ainsi, elles présentent une section polygonale, comme par exemple une section carrée ou rectangulaire.

Le flotteur 12 comprend en outre au moins quatre colonnes, par exemple en acier, dont une colonne centrale, désignée par la référence 20, et trois colonnes extérieures désignées par les références 22, 24 et 26.

D'autres matériaux que de l'acier, peuvent également être utilisés pour réaliser ces colonnes, comme par exemple des matériaux composites.

Les colonnes 20, 22, 24 et 26 présentent une forme cylindrique d'axe parallèle à la direction verticale Z.

Ces colonnes 20, 22, 24 et 26 présentent une section circulaire dans un plan normal à la direction verticale Z.

Les colonnes extérieures 22, 24 et 26 sont raccordées à la colonne centrale 20, par les branches 14, 16 et 18 en forme de ponton du flotteur 12.

Dans l'exemple de réalisation du flotteur 12 représenté sur la figure 1, les colonnes extérieures 22, 24 et 26 sont positionnées, respectivement, sur une extrémité d'une branche 14, 16 et 18 en forme de ponton.

De façon classique, dans ce type de flotteur d'éolienne offshore, les branches 14, 16 et 18 en forme de ponton et les colonnes extérieures 22, 24 et 26, comportent des ballasts.

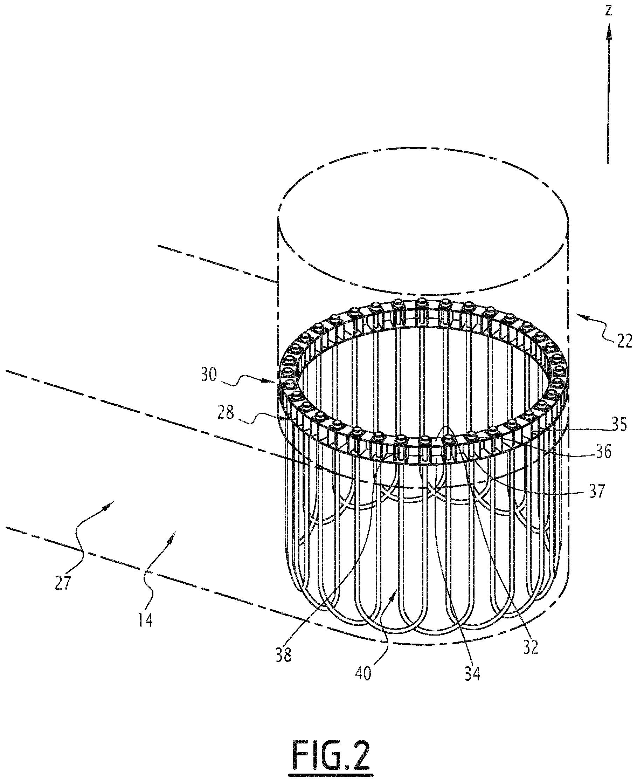

Sur la figure 2, on reconnaît la colonne 22 et la branche 14 en forme de ponton comprenant un ballast, désigné par la référence 27.

Dans la suite de la description, on ne décrira dans le détail, que la fixation de la colonne extérieure 22 sur la branche 14 en forme de ponton correspondante.

Cette description s'applique de manière identique aux autres colonnes extérieures 24 et 26 et à l'agencement de ces autres colonnes extérieures sur les branches correspondantes en forme de ponton.

En référence à la figure 2, la colonne 22 est représentée en position de montage sur la branche 14 en forme de ponton.

La colonne 22 est positionnée sur une portion de montage de la branche 14, désignée par la référence 28.

La portion de montage 28 correspond à la portion de la branche 14 sur laquelle la colonne 22 est montée.

Plus précisément, la portion de montage 28 correspond à l'aire d'une face supérieure de la branche 14 recouverte par la colonne 22.

Dans le cas d'espèce, la colonne 22 présente une section circulaire dans un plan normal à la direction verticale Z.

Ainsi, la portion de montage 28 de la colonne 22 sur la branche 14 correspond sensiblement à la surface d'un disque d'une face supérieure de la branche 14 de même rayon que la section de la colonne 22.

La colonne 22 comporte des moyens en forme de collerette de fixation de cette colonne sur la portion de montage 28.

Les moyens en forme de collerette de fixation de la colonne extérieure 22 à la branche 14 en forme de ponton sont visibles sur la figure 2, et désignés par la référence 30.

Les moyens en forme de collerette de fixation 30 sont agencés à l'intérieur de la colonne 22, à une extrémité inférieure de cette colonne.

Les moyens en forme de collerette de fixation 30 sont en saillie radiale à partir d'une face interne de la colonne 22.

On entend, dans la présente description, par le terme « face interne», une face disposée dans le volume intérieur de la colonne 22.

Dans l'exemple représenté sur la figure 2, les moyens en forme de collerette de fixation 30 comprennent, par exemple, un diaphragme annulaire supérieur et un diaphragme annulaire inférieur, espacés et parallèles l'un par rapport à l'autre selon la direction verticale Z, désignés sur la figure 2 par les références 32 et 34. Le diaphragme annulaire supérieur 32 et le diaphragme annulaire inférieur 34 forment, respectivement, une paroi supérieure et une paroi inférieure des moyens en forme de collerette de fixation 30.

Le diaphragme supérieur 32 et le diaphragme inférieur 34 sont venus de matière avec ou rapportés sur la face interne de la colonne 22. Les moyens en forme de collerette de fixation 30 peuvent être réalisés d'une seule pièce avec la colonne 22 ou être formés par des pièces séparées fixées par exemple par soudage sur celle-ci.

De plus, comme visible sur la figure 2, les moyens en forme de collerette de fixation 30 sont mécano-soudés. En effet, des voiles ou ailettes de renfort, dont l'un est désigné par la référence 35, sont disposés régulièrement entre le diaphragme supérieur 32 et le diaphragme inférieur 34, pour renforcer les moyens en forme de collerette de fixation 30.

Par exemple, les moyens en forme de collerette 30 de fixation sont en acier.

Les moyens en forme de collerette de fixation 30 présentent des trous de passage de câble de post-contrainte.

Ces trous de passage sont ménagés en regard les uns des autres selon la direction verticale Z, dans le diaphragme supérieur 32 et dans le diaphragme inférieur 34.

Ces trous sont par exemple désignés respectivement par les références 36 et 37.

Par exemple, les trous de passage 36 et 37 sont régulièrement répartis sur la circonférence du diaphragme supérieur 32 et du diaphragme inférieur 34.

Comme représenté sur la figure 2, les câbles de post-contrainte, dont l'un est désigné par la référence 38 sur la figure 2 sont, par exemple, chacun placé dans une gaine de protection, dont l'une est désignée par la référence 40 sur la figure 2. Par exemple, avant d'enfiler les câbles de post-contrainte 38 dans les gaines de protection 40, les gaines de protection 40 sont noyées dans le béton de la branche 14 en forme de ponton lors de la réalisation de celle-ci.

Les extrémités des câbles par exemple 38 font saillie au-dessus de la branche 14 en forme de ponton afin de permettre la fixation de la colonne 22 sur cette branche 14.

En plaçant plusieurs câbles 38 de cette façon en cercle dans chaque branche 14, 16 et 18, on obtient une couronne d'éléments en saillie sur chaque branche, permettant de fixer la colonne extérieure correspondante sur la branche respective en forme de ponton. En particulier, la couronne d'éléments en saillie de la colonne 22 est en saillie de la portion de montage 28 de cette colonne 22 sur la branche 14 en forme de ponton.

Comme visible sur la figure 2, les extrémités des câbles de post-contrainte 38 en saillie au-dessus de la branche 14, traversent les trous de passages 36 et 37 correspondants des moyens en forme de collerette de fixation 30.

Bien entendu, d'autres éléments de fixation tels que par exemple des barres de post contrainte, des tirants ou des goujons peuvent être utilisés.

Le flotteur 12 comporte en outre des moyens de fixation qui coopèrent avec les extrémités des câbles de post-contrainte 38 pour fixer les moyens en forme de collerette de fixation 30 aux câbles de post-contrainte 38.

La post-contrainte permet de supprimer les goujons (de type Nelson par exemple), car elle assure une reprise des cisaillements en frottement pur.

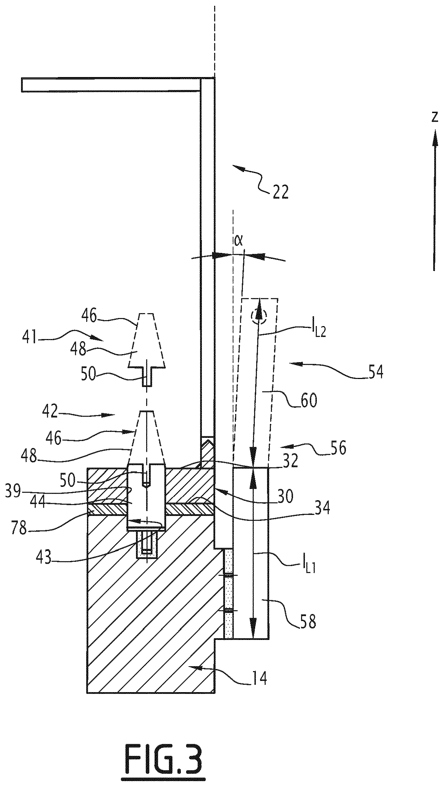

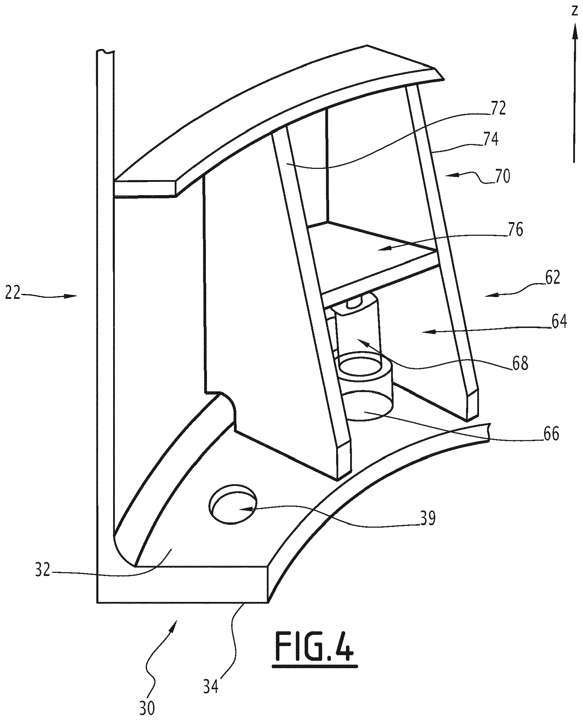

Dans d'autres exemples de réalisation, comme visible sur les figures 3 et 4, les moyens en forme de collerette de fixation 30 sont pleins. Autrement dit, l'espace entre le diaphragme supérieur 32 et le diaphragme inférieur 34 est rempli de matière.

Les moyens en forme de collerette de fixation 30 présentent des trous de passages 39. L'un de ces trous de passage est désigné par la référence 39.

Les trous de passage 39 sont traversent l'épaisseur des moyens en forme de collerette de fixation 30 et sont régulièrement répartis sur la circonférence des moyens en forme de collerette de fixation 30.

Les extrémités des câbles de post-contrainte 38 en saillie au-dessus de la branche 14, traversent les trous de passages 39 correspondants des moyens en forme de collerette de fixation 30 et sont fixés par les moyens de fixation aux moyens en forme de collerette de fixation 30.

Les moyens en forme de collerette de fixation 30 peuvent être réalisés d'une seule pièce avec la colonne 22 ou être formés par des pièces séparées fixées par exemple par soudage sur celle-ci.

En référence à la figure 3, le flotteur 12 comprend des moyens de centrage de la colonne 22 en position de montage sur la portion de montage 28.

Ces moyens de centrage sont désignés par la référence générale 41.

Ces moyens de centrage comprennent des pions de centrage désignés par la référence 42.

On reconnaît sur cette figure, la colonne 22, les moyens en forme de collerette de fixation 30 ainsi que la branche 14 en forme de ponton.

Les pions de centrage 42 sont répartis par exemple régulièrement sur la portion de montage 28 de la colonne 22.

En particulier, les pions de centrage 42 sont régulièrement répartis circonférentiellement sur une périphérie de la portion de montage 28 de sorte à coopérer avec des trous de passage 39 correspondants des moyens en forme de collerette de fixation 30.

Les pions de centrage 42 sont fixés dans des orifices ménagés dans la branche 14 en forme de ponton, dont l'un est désigné par la référence 43.

Chaque pion de centrage 42 comprend deux parties détachables l'une de l'autre, une première partie désignée par la référence 44, formant corps, et une deuxième partie, désignée par la référence 46, formant tête amovible.

Une extrémité du corps 44 du pion de centrage 42 est fixée dans un orifice de fixation 43. L'autre extrémité du corps 44 du pion de centrage 42 fait saillie de la branche 14 en forme de ponton.

La tête amovible 46 du pion de centrage 42 est fixée de manière amovible au corps 44 dudit pion 46, pour pouvoir être séparé de ce corps.

La tête amovible 46 présente une forme générale tronconique.

Plus précisément, la tête amovible 46 présente une portion supérieure tronconique, désignée par la référence 48, et une portion inférieure, désignée par la référence 50, adaptée pour être reçue dans un orifice correspondant 52 ménagé dans une extrémité du corps 44 du pion de centrage 42.

Comme visible sur la figure 3, la tête amovible 46 du pion de centrage 42 est en saillie des moyens en forme de collerette de fixation 30.

En particulier, la portion supérieure tronconique 48 de la tête amovible 46 du pion de centrage 42, est en saillie du diaphragme supérieur 32 des moyens en forme de collerette de fixation 30. Autrement dit, la portion supérieure tronconique 48 de la tête amovible 46 du pion de centrage 42 est en saillie de la face supérieure des moyens en forme de collerette de fixation 30.

Par exemple, six pions de centrage 42 sont régulièrement répartis circonférentiellement sur la branche 14.

Dans d'autres exemples de réalisation, le flotteur 12 pourrait comprendre plus ou moins de pions de centrage 42.

Comme également visible sur la figure 3, le flotteur 12 comprend en outre des moyens de guidage de la colonne 22 en position de montage sur la portion de montage 28 correspondante.

Ces moyens de guidage sont désignés par la référence 54 sur la figure 3.

Les moyens de guidage 54 comprennent des languettes périphériques de guidage de la colonne 14, dont l'une est désignée par la référence 56.

Les languettes périphériques de guidage 56 sont réparties autour de la portion de montage 28 de la colonne 14.

Les languettes périphériques de guidage 56 comprennent chacune une première portion désignée par la référence 58, fixée sur une face périphérique de la branche 14 en forme de ponton, alignée suivant la direction verticale Z.

Par exemple, les premières portions 58 des languettes périphériques de guidage 56 sont fixées à la face périphérique de la branche 14 en forme de ponton par exemple par des goujons.

Bien entendu d'autres moyens peuvent être utilisés.

Les languettes périphériques de guidage 56 comprennent chacune une deuxième portion dans le prolongement de la première portion 58, inclinée vers l'extérieur de la colonne 14, c'est-à-dire inclinée d'un angle par rapport à la direction verticale Z.

Les deuxièmes portions sont désignées par la référence 60 pour la languette 56.

L'angle entre chaque deuxième portion 60 et la direction verticale Z est non nul et compris, par exemple, entre 1 degrés et 30 degrés. Cet angle est désigné par la référence α sur la figure 3.

En variante, par exemple, dans le sens allant de haut en bas selon la direction verticale Z, les deuxièmes portions 60 des languettes périphériques de guidage 56 peuvent être inclinées de 30 degrés sur une longueur de 1 mètre (m) mesurée selon la direction verticale Z, puis de 3 degrés sur une longueur de 2 m mesurée selon la direction verticale Z.

Par exemple, la première portion 58 de la languette périphérique de guidage 56 et la deuxième portion 60 de la languette périphérique de guidage 56 mesurent chacune 2 m.

La longueur de la première portion 58 de la languette périphérique de guidage 56 correspond à la distance mesurée entre les deux extrémités de ladite première portion 56, et la longueur de la deuxième portion 60 de la languette périphérique de guidage 56 est la distance mesurée entre les deux extrémités de ladite deuxième portion 60.

La longueur de la première portion 58 est identifiée par la référence I_{L1} et la longueur de la deuxième portion 60 est identifiée par la référence I_{L2} la figure 3. Les languettes périphériques de guidage 56 sont par exemple en acier.

En variante ou en outre, les languettes périphériques de guidage 56 peuvent aussi être fixées, par leur première portion 58, sur une face supérieure d'une branche en forme de ponton 14.

Les languettes de guidage sont aptes à guider la colonne 22 sur la portion de montage 28 correspondante de la branche 14 en forme de ponton, lors du montage de celle-ci.

En outre, en référence à la figure 4, le flotteur 12 comprend des moyens de réglage en inclinaison de la colonne 22 par rapport aux branches 14, 16 et 18 en forme de ponton, désignés par la référence 62 sur la figure 3

Les moyens de réglage en inclinaison 62 de la colonne 14 comprennent au moins un vérin de réglage, désigné par la référence 64.

Ce vérin 64 comprend un corps, désigné par la référence 66 et une tête mobile, désignée par la référence 68.

Le corps 66 du vérin 64 est adapté pour coopérer avec le corps 44 d'un pion de centrage 42 lorsque la tête amovible 46 du pion de centrage 42 est retirée du corps 44 du pion 42, et la tête mobile 68 du vérin 64 est adaptée pour coopérer avec une portion d'appui correspondante de la colonne 22.

Les moyens de réglage en inclinaison comprennent également, par exemple, une cage à vérin, désignée par la référence 70.

La cage à vérin 70 comprend deux parois parallèles 72 et 74 en appui sur une partie du diaphragme supérieur 32. Autrement dit, les parois parallèles 72 et 74 sont en appui sur la face supérieure des moyens en forme de collerette de fixation 30.

Les moyens de réglage en inclinaison 62 comprennent en outre un panneau de butée, désigné par la référence 76, s'étendant dans un plan normal à la direction verticale Z, à partir de la face interne de la colonne 22, entre les parois 72 et 74.

Le panneau de butée 76 est disposé à l'intérieur de la cage à vérin 70, et solidaire des parois parallèles 72 et 74.

La face inférieure du panneau de butée 76 définit la portion d'appui de la colonne 22 sur laquelle la tête 68 du vérin 64 est apte à venir en appui.

La colonne 22 peut comprendre plusieurs cages à vérin 70, régulièrement réparties à l'intérieur de la colonne 22.

Les cages à vérin 70 sont positionnées à l'intérieur de la colonne 22 de sorte à être disposées en regard d'un pion de centrage 42.

Des agencements analogues sont prévus entre les autres colonnes extérieures et les extrémités correspondantes des branches en forme de ponton.

De même des moyens analogues ou équivalents sont utilisés pour assurer la fixation et le réglage de la colonne centrale sur les parties d'extrémité correspondantes de ces branches en forme de ponton.

Un procédé de montage des colonnes sur les branches en forme de ponton est décrit dans la suite de la description.

Ce procédé est décrit en regard par exemple de la colonne 22 sur la branche 14.

Une première étape du procédé de montage est une étape de manutention et de guidage de la colonne 22 au niveau de la portion de montage 28 de la branche 14.

Lors de cette étape, la colonne 22 est guidée par les languettes périphériques de guidage 56 au-dessus de la portion de montage 28 de la branche 14.

Cette étape permet de bien aligner la colonne 22 avec la portion de montage 28 de la branche 14.

Cette étape permet également d'éviter les mouvements de grande amplitude de la colonne 22 lorsque celle-ci arrive au même niveau que des opérateurs positionnés sur le flotteur 12.

Une deuxième étape du procédé de montage est une étape de centrage de la colonne 22 en position de montage sur la portion de montage 28 correspondante.

Lors de cette étape la colonne 22 est positionnée sur la portion de montage 28 de la branche 14.

Des trous de passage 39 des moyens en forme de collerette de fixation 30 coopèrent avec la tête amovible 46 des pions de centrage 42 pour centrer correctement la colonne 22 sur la portion de montage 28 correspondante.

A l'issue de la deuxième étape du procédé de montage, la tête 46 de chacun des pions de centrage 42 fait saillie à partir du diaphragme supérieur 32.

Une troisième étape du procédé de montage est une étape de réglage en inclinaison de la colonne 22 par rapport à la branche 14 en forme de ponton.

Tout d'abord, la tête 46 des pions de centrage 42 est désolidarisée du corps 44 de ces pions de centrage 42 et retirée, comme cela est visible, en particulier, sur la figure 3.

Puis, un vérin 64 est installé sur le corps d'un pion de centrage 42.

Le corps 66 du vérin 64 est positionné dans l'orifice du corps 44 du pion de centrage 42.

La tête 68 du vérin 64 est alors activée pour coopérer une portion d'appui du panneau de butée 76.

Lors de cette étape, la tête 68 du vérin 64 vient au contact de ladite portion d'appui.

Ainsi, on comprend que du fait que le corps 66 du vérin 64 est en appui sur la branche 14 en forme de ponton, et que la tête 68 du vérin 64 de réglage exerce une force contre le panneau de butée 76, il est possible de régler l'inclinaison de la colonne 22 par rapport à la branche 14 en forme de ponton.

Par exemple, lors du procédé de montage, deux vérins 64 fonctionnent de manière concomitante.

Alternativement, en même temps que l'étape de réglage en inclinaison ou après cette étape, en cas d'espace résiduel entre la surface supérieure de la branche 14 et la face inférieure des moyens en forme de collerette de fixation 30, un coulis de ragréage, tel que du béton sous forme liquide peut être injecté entre la face supérieure du ponton 14 et la face inférieure des moyens en forme de collerette de fixation pour combler ledit espace.

Du béton injecté est représenté par la référence 78 sur la figure 3.

Un procédé similaire peut s'appliquer au montage des autres colonnes extérieures 24, 26 et centrale 20.

Une fois les colonnes 20, 22, 24, 26 montées sur les branches en forme de ponton 14, 16, 18, dans une quatrième étape du procédé de montage, les extrémités des câbles de post-contrainte 38 sont chacun enfilés dans une gaine de protection 40. Puis, les câbles de post-contrainte 38 sont passés dans les trous de passage 39 correspondants des moyens en forme de collerette de fixation 30 pour être fixés à ladite collerette 30.

Cette structure et ce procédé permettent de simplifier et d'accélérer le montage des colonnes et donc des flotteurs et ce, de manière plus sûre pour le flotteur lui-même et son environnement comme par exemple les opérateurs de montage.

Bien entendu d'autres modes de réalisation peuvent être envisagés.

## Revendications

1. Flotteur (12) d'éolienne offshore (10), comprenant au moins quatre colonnes (20, 22, 24, 26), dont une colonne centrale (20) et trois colonnes extérieures (22, 24, 26) raccordées à la colonne centrale (20) par des branches (14, 16, 18) en forme de ponton, **caractérisé en ce que** les colonnes (20, 22, 24, 26) comportent des moyens en forme de collerette de fixation (30) de celles-ci sur des portions de montage (28) correspondantes de la branche (14, 16, 18) en forme de ponton, **en ce qu'**il comprend des moyens de centrage (41) des colonnes (20, 22, 24) en position de montage sur les portions de montage (28) correspondantes de la branche (14, 16, 18) en forme de ponton, et **en ce qu'**il comprend des moyens de guidage (54) des colonnes (20, 22, 24, 26) en position de montage sur les portions de montage (28) correspondantes de la branche (14, 16, 18) en forme de ponton.

2. Flotteur selon la revendication 1, **caractérisé en ce que** les moyens de centrage comprennent des pions de centrage (42) répartis sur la branche (14, 16, 18) en forme de ponton et fixés sur celui-ci, et adaptés pour coopérer avec des trous (36, 37 ; 39) correspondants ménagés dans les moyens en forme de collerette de fixation (30) des colonnes (20, 22, 24, 26), afin de centrer les colonnes (20, 22, 24, 26) sur la branche (14, 16, 18) en forme de ponton, lors de leur montage.

3. Flotteur selon la revendication 2, **caractérisé en ce que** chaque pion de centrage (42) comprend deux parties détachables l'une de l'autre, la première partie (44) formant corps étant fixée sur la branche (14, 16, 18) en forme ponton et la deuxième partie (46) formant tête amovible, étant fixée sur la première partie (44) de manière détachable, pour pouvoir retirer la deuxième partie (46) formant tête.

4. Flotteur selon la revendication 3, **caractérisé en ce que** la deuxième partie (46) formant tête amovible de chaque pion de centrage (42) présente une forme générale tronconique.

5. Flotteur selon l'une quelconque des revendications 1 à 4, **caractérisé en ce que** les moyens de guidage (54) comprennent des languettes périphériques de guidage (56) réparties sur la branche (14, 16, 18) en forme de ponton, autour des portions de montage (28) correspondantes de la branche (14, 16, 18) en forme de ponton et inclinées vers l'extérieur de celles-ci, pour guider la colonne (20, 22, 24, 26) en position de montage sur la portion de montage (28) correspondante.

6. Flotteur selon l'une quelconque des revendications précédentes, **caractérisé en ce que** qu'il comprend des moyens de réglage en inclinaison (62) de la ou chaque colonne (20, 22, 24, 26) par rapport aux branches (14, 16, 18) en forme de ponton.

7. Flotteur selon la revendication 6, **caractérisé en ce que** les moyens de réglage en inclinaison (62) comportent au moins un vérin de réglage (64).

8. Flotteur selon la revendication 3 et la revendication 6 ou 7, **caractérisé en ce que** les moyens de réglage en inclinaison (62) sont adaptés pour être interposés entre les premières parties (44) formant corps de pions de centrage (42) et des portions d'appui correspondantes (76) de la colonne (20, 22, 24, 26).

9. Flotteur selon la revendication 8, **caractérisé en ce que** la ou chaque portion d'appui correspondante (76) de la colonne (20, 22, 24, 26) est prévue dans une cage à vérin (70) de cette colonne (20, 22, 24, 26).

## Patentansprüche

1. Schwimmer (12) für eine Offshore-Windkraftanlage (10), umfassend mindestens vier Säulen (20, 22, 24, 26), einschließlich einer mittleren Säule (20) und drei äußeren Säulen (22, 24, 26), die mit der mittleren Säule (20) durch pontonförmige Schenkel (14, 16, 18) verbunden sind, **dadurch gekennzeichnet, dass** die Säulen (20, 22, 24, 26) Mittel (30) in Form eines Flansches zur Befestigung derselben an entsprechenden Montageabschnitten (28) des pontonförmigen Schenkels (14, 16, 18) aufweisen, dass er Mittel (41) zum Zentrieren der Säulen (20, 22, 24) in der Montageposition an den entsprechenden Montageabschnitten (28) des pontonförmigen Schenkels (14, 16, 18) umfasst, und dass er Mittel (54) zum Führen der Säulen (20, 22, 24, 26) in die Montageposition an den entsprechenden Montageabschnitten (28) des pontonförmigen Schenkels (14, 16, 18) umfasst.

2. Schwimmer nach Anspruch 1, **dadurch gekennzeichnet, dass** die Zentriermittel über den pontonförmigen Schenkel (14, 16, 18) verteilte und daran befestigte Zentrieransätze (42) umfassen, die angepasst sind, mit entsprechenden Löchern (36, 37; 39) zusammenzuarbeiten, die in den Mitteln (30) in Form eines Flansches zur Befestigung der Säulen (20, 22, 24, 26) vorgesehen sind, um die Säulen (20, 22, 24, 26) auf dem pontonförmigen Schenkel (14, 16, 18) bei ihrer Montage zu zentrieren.

3. Schwimmer nach Anspruch 2, **dadurch gekennzeichnet, dass** jeder Zentrieransatz (42) zwei voneinander lösbare Teile umfasst, wobei der erste, einen Körper bildende Teil (44) an dem pontonförmigen Schenkel (14, 16, 18) befestigt ist und der zweite, einen lösbaren Kopf bildende Teil (46) lösbar an dem ersten Teil (44) befestigt ist, um den zweiten einen Kopf bildenden Teil (46) abzuziehen.

4. Schwimmer nach Anspruch 3, **dadurch gekennzeichnet, dass** der zweite, einen lösbaren Kopf bildende Teil (46) jedes Zentrieransatzes (42) allgemein kegelstumpfförmig ist.

5. Schwimmer nach einem beliebigen der Ansprüche 1 bis 4, **dadurch gekennzeichnet, dass** die Führungsmittel (54) umfängliche Führungszungen (56) umfassen, die um die entsprechenden Montageabschnitte (28) des pontonförmigen Schenkels (14, 16, 18) über den pontonförmigen Schenkel (14, 16, 18) verteilt und zu diesen nach außen abgewinkelt sind, um die Säule (20, 22, 24, 26) in die Montageposition auf dem entsprechenden Montageabschnitt (28) zu führen.

6. Schwimmer nach einem beliebigen der vorhergehenden Ansprüche, **dadurch gekennzeichnet, dass** er Mittel zum Einstellen der Neigung (62) der oder jeder Säule (20, 22, 24, 26) in Bezug auf die pontonförmigen Schenkel (14, 16, 18) aufweist.

7. Schwimmer nach Anspruch 6, **dadurch gekennzeichnet, dass** die Mittel zum Einstellen der Neigung (62) mindestens einen Stellzylinder (64) umfassen.

8. Schwimmer nach Anspruch 3 und Anspruch 6 oder 7, **dadurch gekennzeichnet, dass** die Mittel zum Einstellen der Neigung (62) angepasst sind, zwischen den ersten, Körper von Zentrieransätzen (42) bildenden Teilen (44) und entsprechenden Abschnitten (76) zum Abstützen der Säule (20, 22, 24, 26) eingefügt zu werden.

9. Schwimmer nach Anspruch 8, **dadurch gekennzeichnet, dass** der oder jeder entsprechende Abschnitt (76) zum Abstützen der Säule (20, 22, 24, 26) in einem Zylinderkäfig (70) dieser Säule (20, 22, 24, 26) vorgesehen ist.

## Claims

1. Float (12) for an offshore wind turbine (10), comprising at least four columns (20, 22, 24, 26), including a central column (20) and three outer columns (22, 24, 26) connected to the central column (20) by branches (14, 16, 18) forming pontoons, **characterized in that** the columns (20, 22, 24, 26) comprise fixing-collar forming means (30) for fixing them on corresponding assembly portions (28) of the branch (14, 16, 18) forming pontoon, **in that** it comprises centering means (41) of the columns (20, 22, 24) in the assembly position on the corresponding assembly portions (28) of the branch (14, 16, 18) forming pontoon and **in that** it comprises guide means (54) for guiding the columns (20, 22, 24, 26) in the assembly position on the corresponding assembly portions (28) of the branch (14, 16, 18) forming pontoon.

2. Float according to claim 1, **characterized in that** the centering means comprise centering pins (42) distributed on the branch (14, 16, 18) forming pontoon and fixed thereto, and designed to cooperate with corresponding holes (36, 37; 39) in the fixing-collar forming means (30) of the columns (20, 22, 24, 26), for centering the columns (20, 22, 24, 26) on the branch (14, 16, 18) forming pontoons, during their assembly.

3. Float according to claim 2, **characterized in that** each centering pin (42) comprises two parts detachable from each other, the first part (44) forming a body being fixed on the branch (14, 16, 18) forming pontoon and the second part (46) forming a removable head portion, being detachably fixed on the first part (44) in order to remove the second part (46) forming the head.

4. Float according to claim 3, **characterized in that** the second part (46) forming the removable head of each centering pin (42) has a generally frustoconical shape.

5. Float according to any one of claims 1 to 4, **characterized in that** the guide means (54) comprise peripheral guide tabs (56) distributed on the branch (14, 16, 18) forming pontoon, around the corresponding assembly portions (28) of the branch (14, 16, 18) forming pontoon and inclined outwards therefrom, to guide the column (20, 22, 24, 26) in the assembly position on the corresponding assembly portion (28).

6. Float according to any one of the preceding claims, **characterized in that** it comprises inclination adjustment means (62) of the or each column (20, 22, 24, 26) relative to the branches (14, 16, 18) forming pontoons.

7. Float according to claim 6, **characterized in that** the inclination adjustment means (62) comprise at least one adjustment cylinder (64).

8. Float according to claim 3 and claim 6 or 7, **characterized in that** the inclination adjustment means (62) are designed to be interposed between the first parts (44) forming the bodies of the centering pins (42) and corresponding bearing portions (76) of the column (20, 22, 24, 26).

9. Float according to claim 8, **characterized in that** the or each corresponding bearing portion (76) of the column (20, 22, 24, 26) is provided in a cylinder stand (70) of this column (20, 22, 24, 26).
